# EUROPÄISCHE PATENTSCHRIFT

(11) **EP 1 043 183 B1**
(45) Veröffentlichungstag und Bekanntmachung des Hinweises auf die Patenterteilung: **12.05.2004**
(21) Anmeldenummer: 00105432.9
(22) Anmeldetag: 15.03.2000
(51) Int. Cl.: B60J 7/10, B60P 7/08

(54) **Seitenplanenspanner**
Tensioner for lateral tarpaulin elements
Tensionneur pour bâche latérale

(30) Priorität: 09.04.1999 DE 19915927; 10.08.1999 DE 29913954 U
(43) Veröffentlichungstag der Anmeldung: 11.10.2000
(73) Patentinhaber: Franz Miederhoff oHG, D-59846 Sundern (DE)
(72) Erfinder: Than, Johannes, 59846 Sundern-Endorf (DE)
(74) Vertreter: Schröter & Haverkamp

(56) Entgegenhaltungen:
- EP-A- 0 164 744
- DE-U- 29 820 721
- US-A- 4 395 796
- US-A- 4 987 653

## Beschreibung

Die Erfindung betrifft einen Seitenplanenspanner, wie er beispielsweise zum Spannen von Planen eines Nutzfahrzeugaufbaus eingesetzt ist. insbesondere betrifft die Erfindung einen Seitenplanenspanner mit einem Spannhebel-Haken-Modul bestehend aus einem als einarmigen Hebel ausgebildeten, um eine Schwenkachse schwenkbar angelenkten Spannhebel und einem Haken zum Hintergreifen eines gegenüber der zu spannenden Plane als Widerlager dienenden ortsfesten Elements und mit Mitteln zum Übertragen einer durch den Spannhebel ausgeübten Spannbewegung auf die Plane. Ferner betrifft die Erfindung ein Nutzfahrzeug mit einem Planenaufbau ausgerüstet mit solchen Seitenplanenspannem.

Ein derartiger Seitenplanenspanner ist aus der DE 44 15 042 C1 bekannt. Der in diesem Dokument beschriebene Seitenplanenspanner besteht aus einem Spannhebel-Haken-Modul, welches an dem freien Ende eines an der Plane angeschweißten, einrichtbaren Gurtes angeordnet ist. Das Spannhebel-Haken-Modul umfaßt einen als Lasche ausgebildeten Spannhebel, der an einem etwa U-förmig ausgebildeten Unterteil im Bereich der beiden parallelen Schenkel des Unterteils um eine Schwenkachse verschwenkbar angelenkt ist. An dem Unterteil ist ein Haken angeformt, der zum Hintergreifen eines gegenüber der zu spannenden Plane als Widerlager dienenden ortsfesten Elementes, etwa der Unterkante eines Rahmenprofils eines Nutzfahrzeugaufbaus dient. Im eingehängten Zustand des Hakens, bei dem dieser beispielsweise das Rahmenprofil hintergreift, liegt die von dem Spannhebel wegweisende Seite des Unterteils auf der Außenseite der Plane an und stützt sich an der Außenseite des Profils ab. Die Schwenkachse des Spannhebels ist durch einen Bolzen gebildet, um den das freie Gurtende eine Schlaufe bildend umgelegt ist. Dieses Gurtende ist mit seinem anderen Ende mit der zu spannenden Plane verschweißt. Beabstandet von der Schwenkachse des Spannhebels ist dem Spannhebel ein Spannsteg im Bereich des Hebelarmes des Spannhebels zugeordnet, über den die Gurtschlaufe geführt ist. Beim Umlegen des Spannhebels aus seiner Offen-Stellung in seine Geschlossen-Stellung erfolgt eine Gurtspannung infolge der Umlenkung des Gurtes über den von der Schwenkachse beabstandeten Spannsteg. In seiner Geschlossen-Stellung ist der Spannhebel durch einen Verriegelungsmechanismus gegenüber einem unbeabsichtigten Öffnen oder Aufspringen gehalten.

Auch wenn ein solcher Seitenplanenspanner zufriedenstellend und mit der notwendigen Sicherheit einsetzbar ist, müssen dennoch einige Nachteile in Kauf genommen werden. Aufgrund einer nicht auszuschließenden Manipulation an den eingesetzten Spanngurten erfüllt dieser Seitenplanenspanner nicht diejenigen Voraussetzungen, um als Zollverschluß eingesetzt werden zu können. Darüber hinaus kann es vorkommen, daß der Spannhebel in seiner Geschlossen-Stellung nicht bestimmungsgemäß verriegelt ist. Im Zuge eines fahrtwindbedingten Flattems einer Plane schlägt diese gegen den Spanngurt, was wiederum zu einem Aufspringen des Spannhebels führen kann. Folglich löst sich der Haken aus seiner hintergreifenden Stellung, so daß das gesamte, am Ende des Spanngurtes angeordnete Spannhebel-Haken-Modul nicht mehr festgelegt ist und frei an der Außenseite beispielsweise eines Nutzfahrzeugaufbaus schwingen kann. Zum Einrichten des Seitenplanenspanners bezüglich der aufzubringenden Spannkraft auf die Plane wird das freie, die Gurtschlaufen bildende Ende des Spanngurtes entsprechend eingerichtet. Infolge der eingesetzten textilen Materialien für die Spanngurte kann eine solche Einrichtung bei kalten Umgebungstemperaturen infolge der resultierenden Materialsteifigkeit nur mit Mühe vorgenommen werden.

Nachteilig bei diesem vorbekannten Seitenplanenspanner ist ferner, daß eine Benutzung desselben z. T. nur mit zwei Händen möglich ist. Ein Öffnen des Seitenplanenspanners mit dem am Haken verriegelten Spannriegel ist mit zwei Händen durchzuführen, wobei mit einer Hand die Verriegelung gelöst und mit der anderen der Spannhebel geführt wird, um ein unkontrolliertes Aufspringen des Spannhebels infolge der an diesem anliegenden Zugspannung zu verhindern. Der geöffnete Spannhebel ragt dann von dem an der Plane bzw. dem Rahmenprofil mit seiner Unterseite anliegenden Unterteil ab. Zwar ist bei diesem Seitenplanenspanner in seiner Offen-Stellung die Zugspannung von dem Haken genommen, so daß dieser aus seiner das Rahmenprofil hintergreifenden Stellung herausgebracht werden kann, jedoch befindet sich der Haken nach wie vor in derselben Ebene, in der dieser das Rahmenprofil hintergreift. Soll nunmehr die Plane zum Öffnen des Nutzfahrzeugaufbaus beispielsweise nach oben aufgerollt werden, müssen zuvor die einzelnen Seitenplanenspanner aus ihrer am Rahmenprofil anliegenden eingependelten Stellung herausgeschwungen werden, damit beim Anheben der Plane die Haken nicht das Rahmenprofil hintergreifen.

Bei einem solchen vorbekannten Seitenplanenspanner erfolgt beim Spannen desselben durch Umlegen des Spannhebels eine Verschiebung des sich auf der Außenseite der Plane abstützenden Unterteils samt Haken in einer vertikalen Richtung von unten nach oben, durch welche Bewegung der Haken in seine das Rahmenprofil hintergreifende Stellung gebracht wird. Infolge dieser Bewegung bildet sich vor dem Unterteil eine Falte in der zu spannenden Plane aus, wodurch dem eigentlichen Zweck des Seitenplanenspanners, nämlich das Spannen einer Plane möglichst über ihre gesamte Höhe, entgegengewirkt ist. Derartige Falten können zu einem fahrtwindbedingten Flattern führen; dies ist unerwünscht.

Ausgehend von diesem diskutierten Stand der Technik liegt der Erfindung daher die Aufgabe zugrunde, einen eingangs genannten gattungsgemäßen Seitenplanenspanner dergestalt weiterzubilden, daß nicht nur seine Handhabbarkeit zum Öffnen einer Seitenplane verbessert ist, sondern bei dem ein Spannen der Seitenplane auch ohne eine Faltenbildung möglich ist.

Diese Aufgabe wird erfindungsgemäß dadurch gelöst, daß das Spannhebel-Haken-Modul des Seitenplanenspanners schwenkbar gegenüber einem Grundelement angelenkt ist und der Haken schwenkbar um eine von der Schwenkachse des Spannhebels beabstandete und parallel zu dieser ausgerichteten Schwenkachse an dem Hebelarm des Spannhebels angelenkt ist und die Mittel zum Übertragen der durch den Spannhebel ausgeübten Spannbewegung auf die Plane mit dem Grundelement verbunden sind.

Bei dem erfindungsgemäßen Seitenplanenspanner ist das gesamte Spannhebel-Haken-Modul schwenkbar gegenüber einem Grundelement angelenkt. Ist der Seitenplanenspanner an der Seitenplane montiert, dann stützt sich das Grundelement bei gespanntem Seitenplanenspanner beispielsweise am äußeren Rahmenprofil außenseitig ab. Der Haken des Spannhebel-Haken-Moduls ist schwenkbar an dem Hebelarm des Spannhebels angelenkt. Die beiden Schwenkachsen sind voneinander beabstandet, so daß der Abstand der Schwenkachsen den Bewegungsbetrag bestimmt, mit dem der Haken zu dem Spannhebel zum Spannen der Seitenplane bewegt werden kann.

Durch diese Ausbildung des Seitenplanenspanners erfolgt beim Umlegen des Spannhebels zum Schließen des Seitenplanenspanners eine gegeneinander gerichtete Bewegung zwischen dem Haken und dem Grundelement, welches sich beispielsweise auf der Außenseite einer Plane abstützt. Dies hat zur Folge, daß durch die nach unten gerichtete Bewegung des Grundelementes die Plane in dieser Richtung mitbewegt wird, so daß die Ausbildung einer Falte wie beim vorbekannten Stand der Technik nicht möglich ist.

Bei dem beanspruchten Seitenplanenspanner wird als Spanneinrichtung das Zusammenwirken zwischen dem schwenkbar angelenkten Spannhebel und dem daran angelenkten Haken eingesetzt, so daß eine unmittelbare Anbindung des Grundelementes an der Plane möglich ist. Somit brauchen bei diesem Seitenplanenspanner grundsätzlich keine Spanngurte eingesetzt zu werden. Dies ermöglicht daß der beanspruchte Seitenplanenspanner kaum außerhalb der Pendelachse der Seitenplane angeordnet ist, so daß ein Einpendeln des Hakens bei geöffnetem Seitenplanenspanner hinter das Widerlager, beispielsweise das Rahmenprofil entgegengewirkt ist. Durch die schwenkbare Anordnung des Hakens am Hebelarm des Spannhebels befindet sich der Haken bei geöffnetem Spannhebel mit Abstand von der Schwenkachse des Spannhebels zusätzlich vom Rahmenprofil beabstandet, so daß der Haken selbst von dem Rahmenprofil bei dem Öffnungsvorgang des Spannhebels wegbewegt worden ist. Der Spannhebel ist zweckmäßigerweise bezüglich der Plane so eingerichtet, daß dieser nur wenig von dem Grundelement abragt. Folglich wird auch durch eine solche Maßnahme ein Einschwingen des Hakens unter das Rahmenprofil entgegengewirkt.

Bei einem Öffnen einer solchen Seitenplane ist es grundsätzlich nur erforderlich, die Seitenplanenspanner selbst zu öffnen; die Haken befinden sich - wie dargelegt - außerhalb der beispielsweise das Rahmenprofil hintergreifenden Stellung. Anschließend kann die Seitenplane nach oben gezogen oder seitlich verschoben werden, ohne daß zu befürchten wäre, daß die Haken der Seitenplanenspanner wieder in ihre Verriegelungspositionen einschwingen.

Das Grundelement des Seitenplanenspanners kann auf unterschiedliche Art und Weise mit der Plane verbunden sein. Zweckmäßig ist beispielsweise eine Ausgestaltung, bei der unter Einsatz starrer Körper das Grundelement mit der Plane verbunden ist. Beispielsweise kann dieses dadurch realisiert sein, daß an dem Grundelement eine Gewindestange angeordnet ist, die in einen an der Plane festgeschraubten oder vernieteten Bock mit einem Innengeschwinde eingeschraubt ist. Nach einer Längeneinrichtung des Seitenplanenspanners bzw. des Spannhebel-Haken-Moduls mit dem einen Element der Einrichteeinheit, beispielsweise der Gewindestange zu dem anderen Element der Einrichteeinheit, beispielsweise der Einrichtemutter erfolgt ein Spannen der Plane durch Verschwenken des Spannhebels aus einer unteren Offen-Stellung in eine obere Geschlossen-Stellung. Durch die Verwendung eines Spannhebels zum Aufbringen der auf die Plane wirkenden Spannkraft kann die Plane mit einer ausreichend hohen Spannung versehen werden, damit ein Flattem weitestgehend verhindert ist.

Eine solche Ausgestaltung des beanspruchten Seitenplanenspanners erlaubt auch, diesen auch als Zollverschluß auszubilden. Dabei ist es zweckmäßig, daß die Einrichteeinheit in der Geschlossen-Stellung des Spannhebels von diesem bedeckt bzw. abgedeckt ist, so daß eine Zugänglichkeit der Einrichteeinheit nicht möglich ist.

Bei Einsatz einer Gewindestange und einer Einrichtemutter, wobei letztere auch als Innengewinde in einem Bock ausgeführt sein kann, erfolgt eine Längeneinrichtung des Seitenplanenspanners durch Einschrauben der Gewindestange mit dem daran angeordneten Spannhebel-Haken-Modul in das Innengewinde bzw. aus diesem heraus. Eine solche Einrichtung wird auch durch Temperaturschwankungen nicht erschwert. Anstelle einer solchen Einrichtbarkeit verwendend eine Gewindestange und eine Einrichtemutter kann auch vorgesehen sein, die Einrichteeinheit mit Rastmitteln auszustatten.

Das Umlegen des Spannhebels aus seiner Offen-Stellung in seine Geschlossen-Stellung um seine Schwenkachse kann dadurch verwirklicht sein, daß der Spannhebel im Bereich seiner Schwenkachse Seitenwangen aufweist, die in ihrem hinteren Bereich gerundet ausgebildet sind, so daß diese Rundungen eine Auflage auf der Planenaußenseite bilden. Um die Andruckfläche zu vergrößern kann auch vorgesehen sein, daß diese Seitenwangen durch einen Schwenkbolzen miteinander verbunden sind, der in einem zylindrischen Druckstück geführt ist. Der Radius des Druckstückes ist gleich oder geringfügig größer als der Radius der Seitenwangen des Spannhebels im Bereich seiner Schwenkachse. Beim Spannen des Spannhebels stützt sich dieser dann über die Mantelfläche des Druckstückes an der Außenseite der Plane ab.

Die Bereitstellung eines Seitenplanenspanners in der beschriebenen Art und Weise erlaubt zudem auch eine nachträgliche Auswechselbarkeit des Spannhebel-Haken-Moduls. So kann eine Nutzfahrzeugplane, die mit nicht zollfähigen Spannhebel-Haken-Modulen ausgestaltet ist, ohne weiteres gegen solche ausgetauscht werden, die für einen Zollverschluß geeignet sind. Bei Einsatz einer Gewindestange und einer Einrichtemutter erfolgt dieses durch Ausschrauben der Gewindestange mit dem daran angeordneten Spannhebel-Haken-Modul aus der an der Plane befestigten Einrichtemutter und anschließendes Einschrauben der anderen Module.

Weitere Vorteile der Erfindung sind Bestandteil der übrigen Unteransprüche sowie der nachfolgenden Beschreibung bevorzugter Ausführungsbeispiele unter Bezugnahme auf die beigefügten Figuren. Es zeigen:
- **Fig. 1:**: Eine schematisierte Seitenansicht eines Seitenplanenspanners,
- **Fig. 2:**: Eine Unteransicht des Seitenplanenspanners der Figur 1,
- **Fig. 3:**: Eine schematisierte Darstellung einer Plane mit einem im unteren Bereich angeordneten Seitenplanenspanner,
- **Fig. 4:**: Eine Anordnung entsprechend derjenigen der Figur 3 mit einem Seitenplanenspanner des vorbekannten Standes der Technik,
- **Fig. 5:**: Ein weiteres Spannhebel-Haken-Modul für einen Seitenplanenspanner in seiner Offen-Stellung,
- **Fig. 6:**: Das Spannhebel-Haken-Modul der Figur 3 in seiner Geschlossen-Stellung und
- **Fig. 7:**: Den Seitenplanenspanner der Figuren 5 und 6 angebracht an einer Plane.

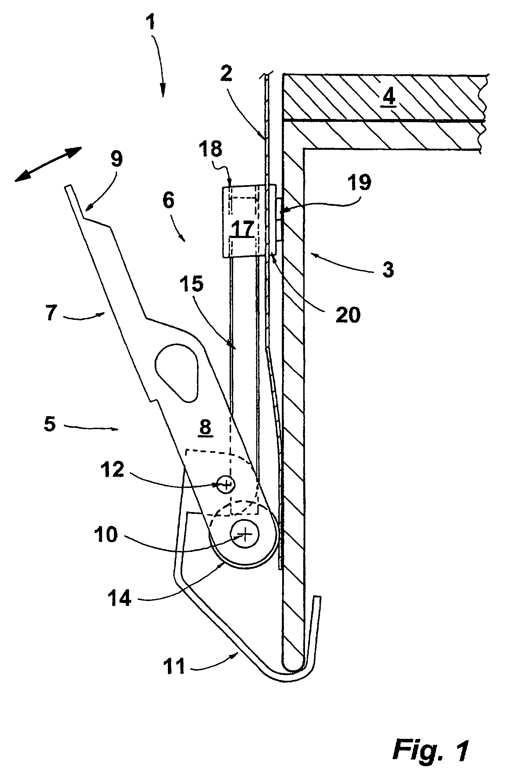

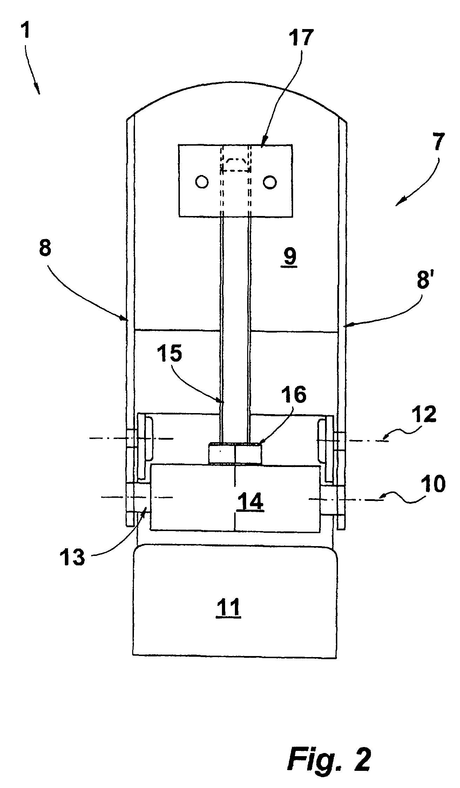

Ein Seitenplanenspanner 1 ist im Bereich des unteren Endes einer Plane 2 eines Nutzfahrzeugaufbaus angeordnet. Der Nutzfahrzeugaufbau ist durch ein Rahmenprofil 3 und eine darauf angeordnete Bodenplatte 4 angedeutet. Das Rahmenprofil 3 ist L-förmig ausgestaltet, wobei der nach unten weisende Schenkel als Widerlager zum Festlegen des Seitenplanenspanners 1 dient. Der Seitenplanenspanner 1 umfaßt ein Spannhebel-Haken-Modul 5 sowie eine Einrichteeinheit 6. Das Spannhebel-Haken-Modul 5 besteht aus einem Spannhebel 7, der in seinem in Figur 1 nach oben weisenden Ende laschenartig ausgebildet ist und zwei Seitenwangen 8, 8' umfaßt, so daß der Spannhebel 7 im Querschnitt U-förmig ausgebildet ist. Die beiden Seitenwangen 8, 8' sind im Bereich ihres oberen Endes durch eine Hebelplatte 9, wie aus Figur 2 erkennbar, miteinander verbunden. Der Spannhebel 7 ist um eine Schwenkachse 10 schwenkbar angeordnet, so daß dieser entsprechend der Pfeilrichtung geschlossen oder geöffnet werden kann. Die Seitenwangen 8, 8' dienen auch zur Anlenkung eines dem Spannhebel-Haken-Modul 5 zugeordneten Hakens 11. Der Haken 11 ist um die Schwenkachse 12 über Lagerstifte schwenkbar zu dem Spannhebel 7 angeordnet. Die Schwenkachse 12 ist von der Schwenkachse 10 des Spannhebels 7 beabstandet.

Die Schwenkachse 10 des Spannhebels 7 ist, wie aus Figur 2 erkennbar, durch einen Schwenkbolzens 13 gebildet. Der Schwenkbolzen 13 ist in einem zylindrischen Bolzen 14 gelagert, der im Radius größer ist als der Radius einer Seitenwange 8, 8' im Bereich der Schwenkachse 10. Der Bolzen 14 liegt an der Außenseite des Rahmenprofils 3 an und stellt bei diesem Ausführungsbeispiel das Grundelement dar. In die Mantelfläche des Bolzens 14 ist eine der Einrichteeinheit 6 zugehörige Gewindestange 15 eingeschraubt und mit einer Kontermutter 16 festgesetzt. Die Gewindestange 15 der Einrichteeinheit 6 steht mit ihrem anderen Ende mit einer an der Plane 2 befestigten Einrichtemutter im Eingriff, die bei dem dargestellten Ausführungsbeispiel durch ein in einen Bock 17 eingebrachtes Innengewinde 18 realisiert ist. Der Bock 17 ist an der Außenseite der Plane 2 durch zwei Befestigungsschrauben 19 unter Einsatz einer Gegenplatte 20 befestigt. Die auf die Plane 2 aufzubringende Spannkraft kann durch Einrichten der Gewindestange 15 bezüglich des Bockes 17 eingerichtet werden.

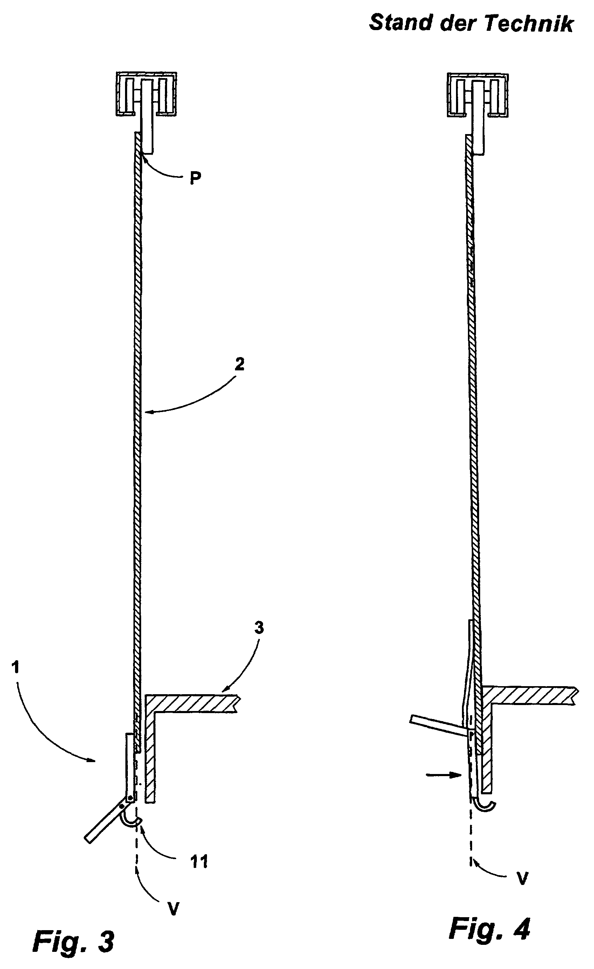

Die Darstellung des Seitenplanenspanners 1 in der Figur 3 macht deutlich, daß durch die Befestigung des Seitenplanenspanners an der Plane 2 im wesentlichen in der Ebene der äußeren Oberfläche der Plane 2 diese im wesentlichen vertikal herabhängt. Die Vertikale ist in dieser Figur gestrichelt dargestellt und mit V bezeichnet. Die Pendelachse der Plane 2 ist mit dem Bezugszeichen P kenntlich gemacht. Durch den Versatz der beiden Schwenkachsen 10, 12 zueinander ist zudem der Haken 11 im Unterschied zu seiner eingehängten Stellung von dem Rahmenprofil 3 beabstandet. Zum Vergleich ist in Figur 4 schematisiert ein Seitenplanenspanner gemäß dem vorbekannten Stand der Technik angeordnet an einer Seitenplane in seiner Offenstellung dargestellt. Die vertikale Ebene der Plane ist in dieser Figur wiederum gestrichelt dargestellt. Insbesondere der abragende Spannhebel in seiner Offenstellung ist verantwortlich für das Einschwingen des Unterteils mit dem daran angeformten Haken in seine am Rahmenprofil anliegende Stellung, so daß ein Aufrollen der Plane - wie eingangs dargestellt - nicht ohne weiteres möglich ist.

In seiner Offen-Stellung befindet sich der Spannhebel 7 des Seitenplanenspanners 1 in seiner vollständig nach unten geschwenkten Stellung. In dieser Stellung wird der Haken 11 zum Spannen der Plane 2 hinter den nach unten weisenden Schenkel des Rahmenprofils 3 eingehängt. Beim anschließenden Schließen des Spannhebels 7 erfolgt eine gegeneinander gerichtete Relativbewegung zwischen dem an dem Spannhebel 7 angelenkten Haken 11 und dem an der Plane 2 befestigten Bock, so daß die Plane 2 bei dieser Bewegung nach unten gezogen wird, so daß eine Faltenbildung vermieden ist. In seiner Geschlossen-Stellung liegt der Spannhebel 7 parallel zur Plane 2 außenseitig auf dieser auf und bedeckt die Einrichteeinheit 6. In der Geschlossen-Stellung des Spannhebels 7 befindet sich die Schwenkachse 12 in einem geringeren Abstand zur Plane 2 als die Schwenkachse 12. Der in den Figuren dargestellte Seitenplanenspanner 1 ist somit als Übertotpunktspanner ausgebildet, so daß eine zusätzliche Verriegelung des Spannhebels 7 nicht erforderlich ist. Auch ein Flattern der Plane 2 kann nicht zu einem Öffnen oder einem unerwünschten Aufspringen des Spannhebels 7 führen, da im Falle eines Flattems die Plane 2 mit dem Bock 17 und somit mit dem Spannhebel 7 flattert, so daß in einem solchen Falle der gesamte Seitenplanenspanner 1 mitbewegt wird und nicht nur der Spannhebel wie beim vorbekannten Stand der Technik.

Zur Vermeidung von Manipulationen an dem an der Plane 2 befestigten Bock 17 ist es zweckmäßig, wie in den Figuren gezeigt, den Bock 17 der Einrichteeinheit 6 in einem Bereich der Plane 2 anzuordnen, der der Außenseite des Rahmenprofils 3 gegenüberliegt.

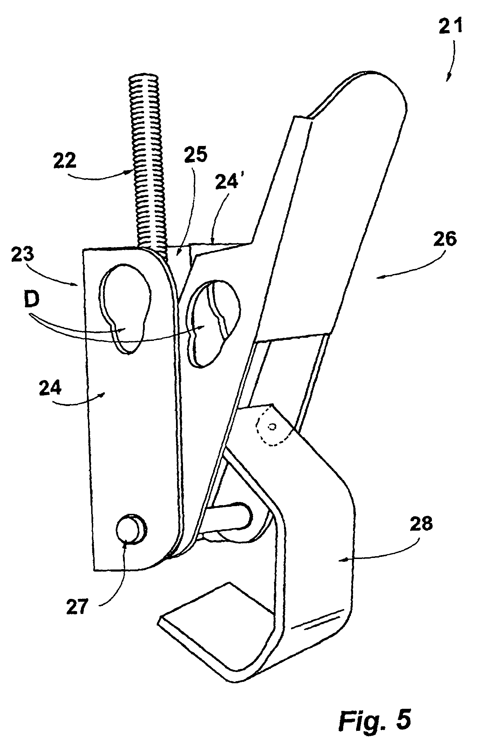

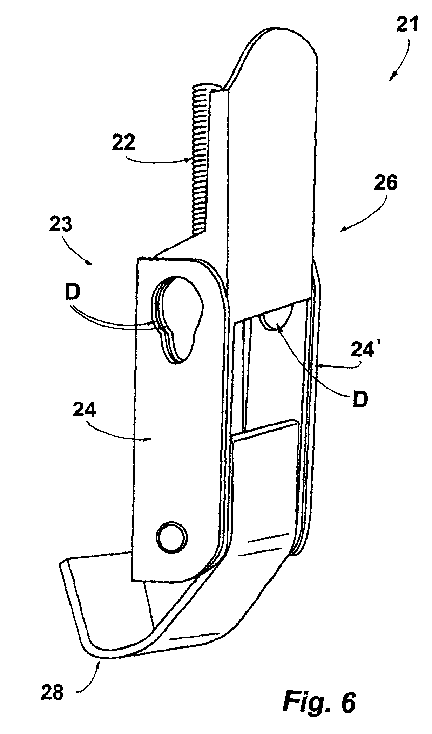

Das in den Figuren 1 und 2 gezeigte Spannhebel-Haken-Modul 5 ist in der gezeigten Ausführungsform für einen Zollverschluß nicht zulässig. In den Figuren 5 und 6 ist ein weiteres Spannhebel-Haken-Modul 21 eines Seitenplanenspanners gezeigt, welches Spannhebel-Haken-Modul 21 im Rahmen eines Zollverschlußes eines Nutzfahrzeugaufbaus eingesetzt werden kann. Prinzipiell ist das Spannhebel-Haken-Modul 21 entsprechend demjenigen der Figuren 1 und 2 aufgebaut. Zusammenwirkend mit dem Spannhebel-Haken-Modul 21 ist ein in den Figuren 5 und 6 nicht dargestellter Bock entsprechend dem Bock 17 vorgesehen. Mit dem an einer Plane festgelegten Bock 17 zusammenwirkend ist eine Gewindestange 22 als weiterer Teil der Einrichteeinheit vorgesehen. Die Gewindestange 22 setzt sich in einer Aufnahme 23 fort, die auch als Unterteil angesprochen werden kann und in diesem Ausführungsbeispiel das Grundelement darstellt. Das Unterteil 23 ist U-förmig aufgebaut und weist zwei Seitenwangen 24, 24' auf, die durch eine Grundplatte 25 miteinander verbunden sind. Der Abstand der Seitenwangen 24, 24' zueinander ist geringfügig größer als die Breite des Spannhebels 26 des Spannhebel-Haken-Moduls 21. Der Spannhebel 26 ist an dem Unterteil 23 durch Einsatz eines Schwenkbolzens 27 schwenkbar angelenkt. Die Aufnahme bzw. das Unterteil 23 stellen eine starre Verlängerung der Gewindestange 22 und somit das dem Spannhebel-Haken-Modul 21 zugehörige Element der Einrichteeinheit dar. Wie auch beim Gegenstand des Spannhebel-Haken-Moduls 5 der Figuren 1 und 2 ist der Haken 28 dieses Spannhebel-Haken-Moduls 21 schwenkbar an dem Hebelarm des Spannhebels 26 angelenkt.

In einem weiteren, in den Figuren nicht dargestellten Ausführungsbeispiel ist vorgesehen, daß die Gewindestange sich von dem Grundelement wegerstreckend durch Einsatz einer Druckfeder nachgiebig angeordnet ist. Eine solche Anordnung ist zweckmäßig, wenn zusätzlich über die Druckfeder eine Spannung auf die Plane aufgebracht werden soll. Bei Einsatz eines derartigen Seitenplanenspanners kann grundsätzlich auf Federn, die in den Rollen bei horizontal verschiebbaren Planen verzichtet werden.

Ist anstelle der beschriebenen Einrichteeinheit ein Spanngurt zum Befestigen des Seitenplanenspanners an der Plane vorgesehen, dann weist das Unterteil zwei einen Umlenksteg bildende Gurtschlitze auf, durch die der Spanngurt eine Schlaufe ausbildend geführt ist.

In die Seitenwangen des Hebelarmes 26 sowie in die Seitenwangen 24, 24' des Unterteils 23 sind miteinander in der Geschlossen-Stellung des Spannhebels 26 fluchtende Durchbrechungen D eingebracht, wie dies in Figur 2 dargestellt ist. In dieser Stellung kann durch die miteinander fluchtenden Durchbrechungen D ein Zollverschlußseil durchgeführt werden, so daß ein Öffnen des Spannhebels 26 verhindert ist. Aus der gezeigten Geschlossen-Stellung der Figur 4 des Spannhebel-Haken-Moduls 21 wird deutlich, daß der Spannhebel 26 die Einrichteeinrichtung - hier lediglich durch die Gewindestange 22 dargestellt - vollständig abdeckt, so daß Manipulationen auch an dem mit der Gewindestange 22 zusammenwirkenden Bock nicht möglich sind. Folglich erfüllt ein Seitenplanenspanner mit dem Spannhebel-Haken-Modul 21 der Figuren 3 und 4 die Voraussetzungen zum Einsatz als Zollverschluß.

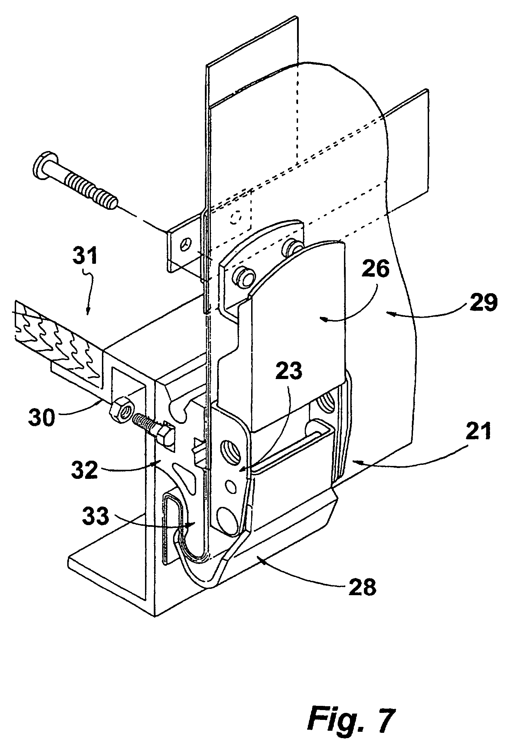

Der Seitenplanenspanner 21 der Figuren 5 und 6 ist in Figur 7 am unteren Ende einer Seitenplane 29 eines Nutzfahrzeugaufbaues angeordnet. Von dem Nutzfahrzeugaufbau ist in dieser Figur der Außenrahmen 30 und eine von diesem gehaltene Bodenplatte 31 erkennbar. An dem Außenrahmen ist ein Profil 32 mit einem nach unten abragenden Verklammerungsschenkel 33 angeordnet. Der Verklammerungsschenkel 33 dient der Bereitstellung eines Widerlagers, den der Haken 28 in der gespannten Stellung des Seitenplanenspanners 21 hintergreift. Die Plane 29 ist länger als der untere Abschluß des Hakens 28 vorgesehen, so daß dieser untere Planenabschnitt einen S-förmigen Schlag ausbildend in den durch den Verklammerungsschenkel 33 gebildeten Hinterschnitt eingreifend vorgesehen sein kann. Der Haken 28 stützt sich am inneren Bereich des Verklammerungsschenkels 33 auf der äußeren Oberfläche der Plane ab, so daß bei einem Umlegen des Spannhebels 26 die gegeneinander gerichtete Relativbewegung zwischen dem Unterteil 23 und dem Haken 28 jeweils zum zusätzlichen Spannen der Plane ohne eine Faltenbildung befürchten zu müssen, eingesetzt werden kann. Durch das Verklemmen des unteren Planenabschnittes durch den Haken 28 an dem Verklammerungsschenkel 33 und die Ausbildung des S-Schlages ist eine wirksame Abdichtung gegenüber aufsteigendem Spritzwasser gebildet.

### Zusammenstellung der Bezugszeichen

- 1: Seitenplanenspanner
- 2: Plane
- 3: Rahmenprofil
- 4: Bodenplatte
- 5: Spannhebel-Haken-Modul
- 6: Einrichteeinheit
- 7: Spannhebel
- 8, 8': Seitenwange
- 9: Hebelplatte
- 10: Schwenkachse des Spannhebels
- 11: Haken
- 12: Schwenkachse des Hakens
- 13: Schwenkbolzen
- 14: Bolzen, Grundelement
- 15: Gewindestange
- 16: Kontermutter
- 17: Bock
- 18: Innengewinde
- 19: Befestigungsschraube
- 20: Gegenplatte
- 21: Spannhebel-Haken-Modul
- 22: Gewindestange
- 23: Aufnahme, Unterteil, Grundelement
- 24, 24': Seitenwangen
- 25: Grundplatte
- 26: Spannhebel
- 27: Schwenkbolzen
- 28: Haken
- 29: Plane
- 30: Außenrahmen
- 31: Bodenplatte
- 32: Profil
- 33: Verklammerungsschenkel

- D: Durchbrechung

## Patentansprüche

1. Seitenplanenspanner mit einem Spannhebel-Haken-Modul (5, 21) bestehend aus einem als einarmigen Hebel ausgebildeten, um eine Schwenkachse (10) schwenkbar angelenkten Spannhebel (7, 26) und einem Haken (11, 28) zum Hintergreifen eines gegenüber der zu spannenden Plane (2) als Widerlager dienenden ortsfesten Elements (3) und mit Mitteln zum Übertragen einer durch den Spannhebel ausgeübten Spannbewegung auf die Plane, **dadurch gekennzeichnet, daß** das Spannhebel-Haken-Modul (5, 21) des Seitenplanenspanners (1) schwenkbar gegenüber einem Grundelement (15, 22) angelenkt ist und der Haken (11, 28) schwenkbar um eine von der Schwenkachse (10) des Spannhebels (7, 26) beabstandete und parallel zu dieser ausgerichteten Schwenkachse (12) an dem Hebelarm des Spannhebels (7, 26) angelenkt ist und die Mittel zum Übertragen der durch den Spannhebel (7, 26) ausgeübten Spannbewegung auf die Plane mit dem Grundelement (15, 22) verbunden sind.

2. Seitenplanenspanner nach Anspruch 1, **dadurch gekennzeichnet, daß** der Spannhebel (7) zumindest im Bereich der Anordnung der Schwenkachsen (10, 12) zwei Seitenwangen (8, 8') aufweist, die durch einen die Schwenkachse (10) des Spannhebels (7) darstellenden Schwenkbolzen (13, 27) miteinander verbunden sind.

3. Seitenplanenspanner nach Anspruch 2, **dadurch gekennzeichnet, daß** das Grundelement ein zylindrischer Bolzen (14) ist, in dem der die Seitenwangen des Spannhebels verbindende Schwenkbolzen (13) gelagert ist, wobei der Radius des Druckstückes 14 größer ist als der Radius der Spannhebelwangen (8, 8') im Bereich des Bolzens (13).

4. Seitenplanenspanner nach einem der Ansprüche 1 bis 3, **dadurch gekennzeichnet, daß** das Grundelement eine als Unterteil ausgebildete Aufnahme (23) mit seitlichen Wangen (24, 24') hat an denen der Spannhebel (26) schwenkbar angelenkt ist, welche Aufnahme (23) zur Aufnahme des Spannhebels (26) in seiner Geschlossen-Stellung vorgesehen ist.

5. Seitenplanenspanner nach einem der Ansprüche 1 bis 4, **dadurch gekennzeichnet, daß** das Grundelement zu seiner Befestigung an einer Plane einen parallel zur Schwenkachse des Spannhebels verlaufenden Umlenksteg zum Umlenken eines Spanngurtes aufweist.

6. Seitenplanenspanner nach einem der Ansprüche 1 bis 5, **dadurch gekennzeichnet, daß** der Seitenplanenspanner (1) als Mittel zum Übertragen der durch den Spannhebel (7, 26) ausgeübten Spannbewegung auf die Plane (2) über eine aus zumindest zwei, mechanisch miteinander im Eingriff stehenden, relativ zueinander einrichtbaren, als starre Körpern konzipierten Elementen (15, 17, 22) bestehende Einrichteeinheit (6) aufweist, von denen ein erstes Element (17) der Plane (2) und ein zweites Element (15, 22) dem Grundelement zugeordnet ist.

7. Seitenplanenspanner nach Anspruch 6, **dadurch gekennzeichnet, daß** die Einrichteeinheit (6) aus einer Gewindestange (15, 22) und einer mit dieser zusammenwirkenden Mutter (17, 18) besteht.

8. Seitenplanenspanner nach Anspruch 7, **dadurch gekennzeichnet, daß** das an der Plane (2) festlegbare Element der Einrichteeinheit (6) ein in einem Bock (17) ausgeführtes Innengewinde (18) ist.

9. Seitenplanenspanner nach einem der Ansprüche 4 bis 8, **dadurch gekennzeichnet, daß** in die Seitenwangen des Spannhebels (26) und in die Seitenwangen (24, 24') der Aufnahme (23) fluchtende Durchbrechungen (D), etwa zum Durchführen eines Zollverschlußseiles in der Geschlossen-Stellung des Spannhebel-Haken-Moduls (21) eingebracht sind.

10. Seitenplanenspanner nach einem der Ansprüche 6 bis 8, **dadurch gekennzeichnet, daß** die Einrichteeinheit (6) in der Geschlossen-Stellung des Spannhebel-Haken-Moduls (5, 21) von dem Spannhebel (7) abgedeckt ist.

11. Nutzfahrzeug mit einem Planenaufbau umfassend zumindest eine Seitenplane (29), an der im Bereich des unteren Abschlusses der Plane (29) eine Vielzahl von Seitenplanenspannem nach einem der Ansprüche 1 bis 10 angeordnet sind, **dadurch gekennzeichnet, daß** sich der untere Abschluß einer seitlich herabhängenden Plane (29) unterhalb des unteren Abschlusses der Haken (28) der Seitenplanenspanner (21) befindet, so daß dieser untere Planenabschnitt bei geschlossenen Seitenplanenspannem (21) durch die Haken (28) verklemmt gehalten ist.

12. Nutzfahrzeug nach Anspruch 11, **dadurch gekennzeichnet, daß** als Widerlager zum Einhaken der Haken (28) der Seitenplanenspanner (21) Teil eines Profils (32) ist, welches außenseitig an dem Außenrahmen (30) des Nutzfahrzeugaufbaues angeordnet ist und bei gespannten Seitenplanenspannem (21) der untere Abschnitt der Plane 29 in dem zwischen einem Verklammerungsschenkel (33) des Profils (32) und dem Außenrahmen (30) gebildeten Hinterschnitt einen S-förmigen Schlag ausbildend gehalten ist.

## Claims

1. Curtain side tensioning means, having a tension lever-hook module (5, 21), comprising a tension lever (7, 26), which is configured as a one-arm lever and is articulated pivotably about a pivoting axis (10), and a hook (11, 28) for rear engagement of a stationary element (3) serving as an abutment relative to the curtain (2) to be tensioned, and having means for transferring a tension movement performed by the tension lever to the curtain, **characterised in that** the tension lever-hook module (5, 21) of the curtain side tensioning means (1) is articulated pivotably relative to a basic element (15, 22) and the hook (11, 28) is articulated pivotably on the lever arm of the tension lever (7, 26) about a pivoting axis (12), which is at a spacing from the pivoting axis (10) of the tension lever (7, 26) and aligned parallel to said axis, and the means for transferring the tension movement performed by the tension lever (7, 26) to the curtain are connected to the basic element (15, 22).

2. Curtain side tensioning means according to claim 1, **characterised in that** the tension lever (7) has two side cheeks (8, 8') at least in the region of the arrangement of the pivoting axes (10, 12), which side cheeks are connected to each other by a pivoting pin (13, 27) representing the pivoting axis (10) of the tension lever (7).

3. Curtain side tensioning means according to claim 2, **characterised in that** the basic element is a cylindrical pin (14), in which the pivoting pin (13), which connects the side cheeks of the tension lever, is mounted, the radius of the pressure element (14) being greater than the radius of the tension lever cheeks (8, 8') in the region of the pin (13).

4. Curtain side tensioning means according to one of the claims 1 to 3, **characterised in that** the basic element has receiving means (23), configured as an underpart, having side cheeks (24, 24'), on which the tension lever (26) is articulated pivotably, which receiving means (23) is provided for receiving the tension lever (26) in its closed position.

5. Curtain side tensioning means according to one of the claims 1 to 4, **characterised in that** the basic element, for its attachment to a curtain, has a deflection web for deflecting a tensioning belt, which deflection web extends parallel to the pivoting axis of the tension lever.

6. Curtain side tensioning means according to one of the claims 1 to 5, **characterised in that** the curtain side tensioning means (1) has, as means for transferring the tension movement performed by the tension lever (7, 26) to the curtain (2), an adjustment unit (6) comprising at least two elements (15, 17, 22) which are mechanically in engagement with each other, are adjustable relative to each other and designed as rigid bodies, of which elements a first element (17) is associated with the curtain (2) and a second element (15, 22) with the basic element.

7. Curtain side tensioning means according to claim 6, **characterised in that** the adjustment unit (6) comprises a threaded rod (15, 22) and a nut (17, 18) co-operating with the latter.

8. Curtain side tensioning means according to claim 7, **characterised in that** the element of the adjustment unit (6), which can be fixed to the curtain (2), is an internal thread (18) configured in a bracket (17)..

9. Curtain side tensioning means according to one of the claims 4 to 8, **characterised in that** openings (D) aligned in the side cheeks of the tension lever (26) and in the side cheeks (24, 24') of the receiving means (23), for instance for guiding through a customs seal cord, are introduced in the closed position of the tension lever-hook module (21).

10. Curtain side tensioning means according to one of the claims 6 to 8, **characterised in that** the adjustment unit (6) in the closed position of the tension lever-hook module (5, 21) is covered by the tension lever (7).

11. Commercial vehicle, having a curtain body, comprising at least one side curtain (29) on which a multiplicity of curtain side tensioning means according to one of the claims 1 to 10 is disposed in the region of the lower end of the curtain (29), **characterised in that** the lower end of a laterally downwardly hanging curtain (29) is located beneath the lower end of the hooks (28) of the curtain side tensioning means (21) so that this lower curtain portion is held clamped by the hooks (28) when the curtain side tensioning means (21) are closed.

12. Commercial vehicle according to claim 11, **characterised in that**, as an abutment for hooking in the hooks (28), the curtain side tensioning means (21) is part of a profile (32) which is disposed on the outer side on the outer frame (30) of the commercial vehicle body and, when the curtain side tensioning means (21) are tensioned, the lower portion of the curtain (29) is retained in the undercut formed between a clamping member (33) of the profile (32) and the outer frame (30) so as to form an S-shaped piece.

## Revendications

1. Tensionneur pour bâche latérale comprenant un module levier de tension-crochet (5, 21) constitué d'un levier de tension (7, 26), conformé en levier à un bras, articulé de manière pivotante sur un axe de pivotement (10) et comprenant un crochet (11, 28) pour saisir par l'arrière un élément fixe (3) par rapport à la bâche (2) à tendre faisant office de butée et comprenant des moyens pour transférer sur la bâche le mouvement de serrage exercé par le levier de tension, **caractérisé en ce que** le module levier de tension-crochet (5, 21) du tensionneur (1) pour bâche latérale est articulé de manière pivotante par rapport à l'élément de base (15, 22) et **en ce que** le crochet (11, 28) est articulé de manière pivotante sur le bras du levier de tension (7, 26), sur un axe de pivotement (12) qui est parallèle et à distance de l'axe de pivotement (10) du levier de tension (7, 26), et **en ce que** les moyens pour transférer sur la bâche le mouvement de serrage exercé par le levier de tension (7, 26) soient reliés avec l'élément de base (15, 22).

2. Tensionneur pour bâche latérale selon la revendication 1, **caractérisé en ce que** le levier de tension (7) présente au moins au niveau de la disposition des axes de pivotement (10, 12) deux joues latérales (8, 8') qui sont reliées l'une à l'autre au moyen d'un tourillon de pivotement (13, 27) constituant l'axe de pivotement (10) du levier de tension (7).

3. Tensionneur pour bâche latérale selon la revendication 2, **caractérisé en ce que** l'élément de base est un tourillon (14) cylindrique dans lequel est logé le tourillon de pivotement (13) reliant les joues latérales du levier de tension, sachant que le rayon de la pièce de pression 14 est plus grand que le rayon des joues (8, 8') du levier de tension au niveau du tourillon (13).

4. Tensionneur pour bâche latérale selon l'une des revendications 1 à 3, **caractérisé en ce que** l'élément de base présente un logement (23) conformé en partie inférieure, comportant des joues latérales (24, 24') sur lesquelles est articulé de manière pivotante le levier de tension (26), lequel logement (23) est prévu pour recevoir le levier de tension (26) dans sa position fermée.

5. Tensionneur pour bâche latérale selon l'une des revendications 1 à 4, **caractérisé en ce que** l'élément de base présente, afin d'être fixé à une bâche, un axe de renvoi parallèle à l'axe de pivotement du levier de tension afin de renvoyer la courroie de serrage.

6. Tensionneur selon l'une des revendications 1 à 5, **caractérisé en ce que** le tensionneur (1) pour bâche latérale comporte, en tant que moyen de transmission du mouvement de serrage exercé par le levier de tension (7, 26) sur la bâche (2), une unité d'ajustage (6) constitué d'au moins deux éléments (15, 17, 22) conçus en tant que corps rigides, mécaniquement engagés l'un dans l'autre et réglables l'un par rapport à l'autre, parmi lesquels un premier élément (17) est affecté à la bâche (2) et un second élément (15, 22), à l'élément de base.

7. Tensionneur pour bâche latérale selon la revendication 6, **caractérisé en ce que** l'unité d'ajustage (6) est constitué d'une tige filetée (15, 22) et d'un écrou (17, 18) agissant conjointement avec celle-ci.

8. Tensionneur pour bâche latérale selon la revendication 7, **caractérisé en ce que** l'élément, fixable à bâche (2), de l'unité d'ajustage (6) est un filetage femelle (18) réalisé sur une patte d'attache (17).

9. Tensionneur pour bâche latérale selon l'une des revendications 4 à 8, **caractérisé en ce que** les joues latérales du levier de tension (26) de même que les joues latérales 24, 24' du logement (23) comprennent des ouvertures (D) alignées par exemple pour y glisser un câble de scellement douanier lorsque le module levier de tension-crochet (21) est en position fermée.

10. Tensionneur pour bâche latérale selon l'une des revendications 6 à 8, **caractérisé en ce que** l'unité d'ajustage (6) est recouverte par le levier de tension (7) lorsque le module levier de tension-crochet (5, 21) est en position fermée.

11. Véhicule utilitaire avec une structure bâchée comprenant au moins une bâche latérale (29) sur laquelle sont placés, au niveau de l'extrémité inférieure de la bâche (29), une multitude de tensionneurs pour bâche latérale selon l'une des revendications 1 à 10, **caractérisé en ce que** l'extrémité inférieure d'une bâche (29) pendant latéralement se trouve sous l'extrémité inférieure du crochet (28) du tensionneur (21) pour bâche latérale de sorte que cette section inférieure de bâche soit maintenue par blocage par le crochet (28) lorsque le tensionneur (21) pour bâche latérale est fermé.

12. Véhicule utilitaire selon la revendication 11, **caractérisé en ce que** la butée servant à l'accrochage du crochet (28) du tensionneur (21) pour bâche latérale est une partie d'un profilé (32), lequel est disposé sur la face extérieure d'un châssis extérieur (30) de la structure de véhicule utilitaire et **en ce que** la section inférieure de la bâche (29) est maintenue, lorsque le tensionneur (21) pour bâche latérale est serré, dans la contre-dépouile formée entre un montant de blocage (33) du profilé (32) et le châssis extérieur (30), tout en formant un pli en forme de S.
